# EUROPEAN PATENT SPECIFICATION

(11) **EP 4 613 640 B1**
(45) Date of publication and mention of the grant of the patent: **11.11.2026**
(21) Application number: 24162379.2
(22) Date of filing: 08.03.2024
(51) Int. Cl.: B64C 9/22, B64C 9/02, B64C 9/24

(54) **WING FOR AN AIRCRAFT AND HIGH LIFT ASSEMBLY CONNECTION METHOD**
FLÜGEL FÜR EIN FLUGZEUG UND VERBINDUNGSVERFAHREN FÜR EINE HOCHAUFTRIEBSANORDNUNG
AILE POUR AÉRONEF ET PROCÉDÉ DE LIAISON D'ENSEMBLE HYPERSUSTENTATEUR

(43) Date of publication of application: 10.09.2025
(73) Proprietor: Airbus Operations GmbH, 21129 Hamburg (DE)
(72) Inventor: Krey, Dennis, 21129 Hamburg (DE); Schlipf, Bernhard, 21129 Hamburg (DE)
(74) Representative: Airbus Germany

(56) References cited:
- US-A- 4 470 569
- US-A- 4 753 402
- US-A1- 2022 227 476

## Description

The present invention relates to a high lift assembly, a wing for an aircraft and a method of connecting a high lift assembly to the wing of an aircraft.

The described wing for an aircraft comprises a main wing and a high lift assembly, the high lift assembly comprising a high lift body, a bracket and a connection assembly movably connecting the high lift body to the main wing such that the high lift body is movable between a retracted position and at least one extended position (e.g. movable relative to the main wing). To enable movement of the high lift body between the extended and retracted position, the high lift body comprises a slat track and a roller bearing that movably connects the high lift body to the main wing. The slat track may comprise a slat track axis extending along the length thereof, such that the slat track is movable along the slat track axis via the roller bearing. The high lift body may be or comprise a leading edge slat or a trailing edge flap of a wing for an aircraft.

The bracket connects (e.g. directly connects) the connection assembly to the main wing and comprises a plurality of bracket connection points for connecting the connection assembly (e.g. for connecting the connection structure of the connection assembly) to the main wing. The connection assembly of the high lift assembly comprises a plurality of high lift connection points, each high lift connection point corresponding to a connection point of the bracket. Each high lift connection point and corresponding bracket connection point are connected by a connector (e.g. an elongate connector).

Wings for aircraft generally have connection assemblies that movably connect a high lift body to the main wing, for example so as to allow the high lift body to move between the extended and retracted position. The connection assembly in the wing of an aircraft may be supported by the wing box of the aircraft and connected to the wing box via an interface. The wing box provides structural support to the wing of the aircraft, and often comprises or defines a rib structure at the forward leading edge of the wing externally of the wing box itself, which may be used to carry leading edge devices such as slats, which may be operated and supported via a connection assembly.

The connection assembly may usually be assembled with the wing box of the wing for an aircraft. During assembly, the connection assembly is connected to the wing box via an interface that may be toleranced and configured so as to ensure a desired alignment of the wing box and the connection assembly. The alignment between the wing box and the connection assembly is important since this will also determine the orientation of the high lift body relative to the main wing. The installation of a connection assembly to the main wing is therefore a task which requires a high degree of precision. Installation of the connection assembly may be done during assembly of the wing box, meaning that the wing box and the connection assembly may be assembled together so as to set a desired orientation of the connection assembly relative to the wing box.

US 2022/227476 A1 discloses a wing for an aircraft comprising a connection assembly that movably connect a high lift body to the main wing.

It is desirable to modularise the process of constructing an aircraft, for example to improve efficiency in the process of constructing the aircraft and/or to automate some steps involved in the construction of an aircraft. Modularisation can also have the advantage that repair and replacement of parts is easier, as individual parts (e.g. modules) of the aircraft may be taken from the aircraft, and replaced with an identical module that does not need any replacement work, as well as permitting smaller modules to be assembled quickly and easily by a single worker, or a small number of workers. This would then allow the part that needs repair to be repaired on the ground without the rest of the aircraft also having to remain grounded with it, this greatly reducing the grounding times of the aircraft. However, in the case of the connection assembly, the high degree of precision required means that separating the construction of the wing box from the placement of the connection assembly into discreet steps would render sufficiently accurate placement of the connection assembly impossible, since it would have to be attached to a previously constructed wing box, with which there no longer existed the freedom to adjust the relative position of certain components thereof.

It is therefore an object of the invention to provide a high lift assembly, a wing and a method for connecting a high lift assembly to the wing of an aircraft that is simple and may be carried out by relatively few personnel and that facilitates modular construction of the wing of an aircraft. It is further an object of the invention to permit such a simple and modular construction while being able to accurately orient the high lift assembly (and the connection assembly thereof) relative to the main wing.

The object of the invention is realised in accordance with appended independent claim 1, in that the described bracket comprises a first and a second flange, and the plurality of bracket connection points are located on (e.g. defined by) the first and second flange, and each of the first and second flange comprise a respective first and second landing surface configured to abut a surface of the connection assembly, the first landing surface being oriented perpendicular to the second landing surface.

Having perpendicularly oriented landing surfaces may assist to guide the connection assembly into an approximate position in which the connection assembly may be connected to the bracket. In addition, the forces acting on the connection assembly may be directed through the landing surfaces, and therefore through the flange, rather than all of the forces being directed through the connection points, and therefore the connection members located therebetween. Therefore, this configuration may provide a strong and robust connection and facilitate installing the connection assembly in a modular sequence.

The plurality of high lift connection points may be located in (e.g. may be defined by) the one of the first and second landing surfaces. The first landing surface is oriented non-parallel to the second landing surface.

The bracket connection points and the high lift connection points may be apertures defined in the first and second flanges, and connection assembly respectively, and the first and second widths are first and second diameters. The apertures may be circular, and each may comprise a central axis extending through the centre thereof, and may be perpendicular to one of the first and second landing surfaces (e.g. perpendicular to the landing surface in which the connection point is located/defined) and/or parallel to the first and second flanges.

At least one of the plurality of connection points may be a master connection point having first width, and the remainder of the bracket connection points may be slave connection points having a second width, and wherein the high lift connection points each have a width equal to the first width. Having slave connection points having a different width than master connection points permits the high lift assembly to be attached to the main wing taking into account slight deviations in the location of the bracket and the high lift connection points arising as a result of tolerances during the construction of the main wing (e.g. the wing box of the main wing). For example, where the second width is greater than the first width, this may permit attachment of the corresponding connection point over a larger area, thus in the situation where a connection point is e.g. 1mm offset from an expected location, a connection may still be able to be established. This may permit the main wing (e.g. the wing box of the main wing) to be preassembled before the high lift assembly is mounted thereto, thus assisting to modularise the process of the construction of a main wing.

In some examples, all the connection points (e.g. on the bracket) may be slave connection points (e.g. having a different width compared to the width of the high lift connection points). This may be acceptable in cases where the landing surfaces are oriented perpendicularly, since some of the force may be transmitted from the connection assembly to the bracket through contact between the landing surfaces, rather than through the connection points.

The first width may be smaller than the second width. Where the first and second widths are first and second diameters, then the first diameter may be smaller than the second diameter.

The bracket may comprise at least two master connection points. Each of the at least two master connection points may be located on either the first or the second flange. Alternatively, both of the at least two master connection points may be located on the first flange or the second flange (e.g. on the landing surface thereof). The master connection points may enable a user to secure the high lift assembly onto the bracket initially in a simple way, before connecting the remainder of the slave connection points to fully secure the high lift assembly relative to the bracket and therefore the main wing.

A third and a fourth flange may each comprise a respective third and fourth landing surface, wherein the third landing surface may be located in the same plane as the first landing surface, and the fourth landing surface may be located in the same plane as the second landing surface. The third landing surface may be parallel to the first landing surface, while the fourth landing surface may be parallel to the second landing surface.

The third flange may be identical to the first flange, and the fourth flange may be identical to the second flange, and the third and fourth flange may be laterally spaced from the first and second flange respectively, such that the connection assembly may be at least partially located therebetween. This may simplify construction by providing identical flanges, and ensure that the high lift assembly is adequately supported on either side thereof.

The connection assembly (e.g. the connection structure of the connection assembly) may comprise a first surface and a second surface, the plurality of high lift connection points being located in (e.g. defined by) the first and second surface. The high lift connection points located in the first surface may be configured to connect with the bracket connection points of the first flange. The high lift connection points located in the second surface may be configured to connect with the bracket connection points of the second flange.

A second aspect relates to a high lift assembly according to appended independent claim 12, for a wing for an aircraft.

The high lift assembly comprises a high lift body comprising a high lift structure, a bracket comprising a plurality of high lift connection points, and a connection assembly. The high lift structure may be the structure of the high lift body, e.g. the form as a slat, flap or the like. The connection assembly comprises a slat track that is configurable to be mounted to a main wing of the wing via a roller bearing such that the slat track movably connects the high lift body to the main wing such that the high lift body is movable between a retracted position and at least one extended position, the connection assembly additionally comprises a plurality of high lift connection points, each high lift connection point corresponding to a connection point on the bracket, each high lift connection point and corresponding bracket connection point being connected by a connector. The bracket comprises a first and a second flange, wherein the plurality of bracket connection points are located on the first and second flange and each of the first and second flange comprise a respective first and second landing surface configured to abut a surface of the connection assembly, the first landing surface being oriented perpendicular to the second landing surface.

A third aspect relates to a method according to appended independent claim 13, for connecting a high lift assembly to the wing of an aircraft according to the previous aspect. The method comprises preassembling the wing for an aircraft (e.g. the wing box of the wing for an aircraft), aligning the at least one bracket connection point (e.g. a master bracket connection point) on a first landing surface with a corresponding high lift connection point on the connection assembly, connecting the at least one aligned bracket connection point with the corresponding high lift connection points via a connector, subsequently connecting the remaining bracket connection points (e.g. the slave bracket connection points) with the corresponding high lift connection points via a connector.

The method may comprise contacting a surface of the connection assembly (e.g. an outer connection structure of the connection assembly) with both a first and second landing surface of the bracket before aligning the master bracket connection point with a corresponding high lift connection point.

An aspect relates to an aircraft according to appended claim 15, comprising a wing according to the first aspect.
- Figure 1: is a perspective view of an aircraft, showing a wing of the aircraft;
- Figure 2: is a schematic view of a connection assembly in an aircraft;
- Figure 3: is a schematic view of a connection assembly cassette;
- Figures 4A-C: provide views of a connection assembly cassette mounted to an aircraft wing;
- Figure 5: schematically illustrates a bracket and connected high lift assembly;
- Figure 6: provides further detail of the connection between the bracket and the high lift assembly.

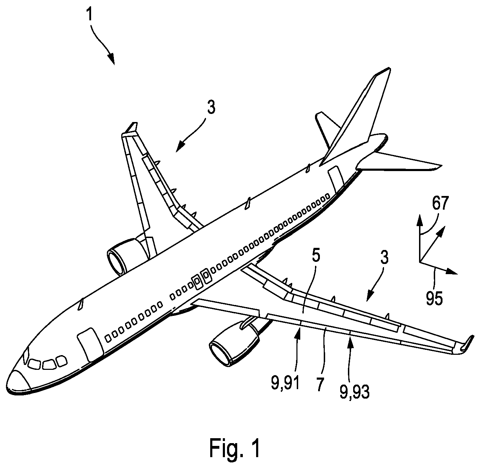

In Fig. 1 an aircraft 1 according to an embodiment of the present invention is illustrated. The aircraft 1 comprises a wing 3 that is formed according to an embodiment of the present invention.

As shown in Fig. 1, the connection assembly 9 relates to a first connection assembly 91, and the wing 3 comprises a second connection assembly 93 connecting the slat 7 to the main wing 5 in a position spaced apart from the first connection assembly 91 in a wing span direction 95, and wherein the second connection assembly 93 is formed as the first connection assembly 91. Additionally illustrated in Fig. 1 is a wing thickness direction 67. While, in Fig. 1, the connection assembly 9 is illustrated as connecting slat 7 to the main wing 5, it should also be understood that the connection assembly 9 may be used to connect a trailing edge flap 2 to the wing 5 of an aircraft.

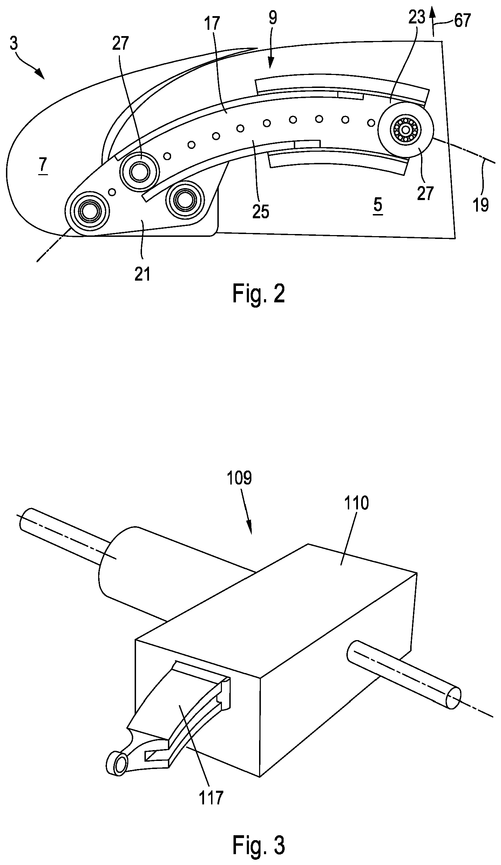

Fig. 2 shows an example of a connection assembly 9 of a wing for an aircraft, which is configured to connect a slat to the main wing of an aircraft. The connection assembly 9 may be used in combination with a wing 1 similar to that as described in Fig. 1, where the wing 1 comprises a main wing 5, a slat 7, and a connection assembly 9 (according to the present disclosure) movably connecting the slat 7 to the main wing 5, such that the slat 7 is movable between a retracted position and at least one extended position.

In Figure 2, the connection assembly 9 comprises a slat track 17 that extends along a track longitudinal axis 19 between a front end 21 and a rear end 23. The front end 21 of the slat track 17 is fixedly mounted to the slat 7. The rear end 23 and the intermediate portion 25 of the slat track 17 are movably mounted to the main wing 5 by a roller bearing 27 such that the slat track 17 is movable along the track longitudinal axis 19.

An alternative connection assembly 109 is illustrated in Figure 3, this time in the form of a connection assembly cassette. Here, the slat track 117 is partially located inside a cassette housing 110, and the roller bearing on which the slat track 117 is located completely in the housing 110. In order to move the slat track 117 between an extended and a retracted position, an actuator or actuators are provided that penetrate the cassette housing 110 and permit movement of the slat track 117.

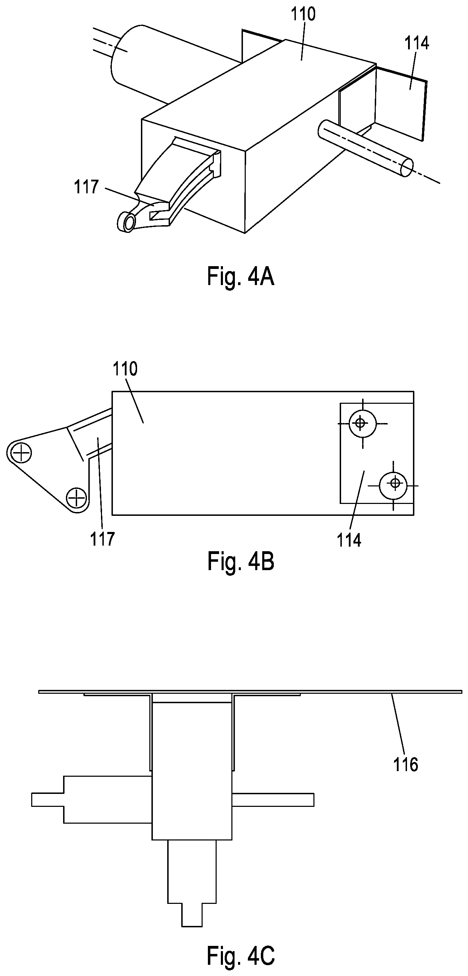

In both the case of the connection assembly 9, 109 having an "open" construction as shown in Figure 2, or a "cassette" construction as is shown in Figure 3, the connection assembly may be mounted to the main wing of an aircraft via a mounting arrangement. One example of a mounting arrangement 114 is illustrated in Figure 4A. Here, a cassette housing 110 is mounted to a main wing 116 of an aircraft via the mounting arrangement 114. The mounting arrangement 114 is in the form of a bracket, which comprises a number of locations at which the bracket is connected to the cassette 110, for example via a known connector. In this example, the main wing 116 (and in particular the wing box of the main wing) has been constructed at the same time as the cassette 110 was mounted thereon. This has the effect of permitting the orientation of the cassette 110 relative to the main wing 116 to be adapted such that the slat track 117 is at the desired angle relative to the main wing 116. The exact orientation required by the connection assembly 9, 109 relative to the main wing may change slightly depending on the exact connection assembly 9, 109, for example due to manufacturing tolerances during the production of the aircraft wing, the main wing (including the wing box) and/or the connection assembly itself. Therefore, at present it is important to ensure that the connection assembly 9, 109 is adequately oriented relative to the main wing 116 during production thereof.

While the desire to modularise the production of an aircraft provides advantages in terms of more efficient production, as well as improved processes for the repair and replacement of aircraft parts, it has the effect that the already assembled (e.g. preassembled) parts are not able to be adjusted to account for slight anomalies in the dimensions of parts (e.g. of a connection assembly) so as to accurately orient those parts relative to the preassembled structure.

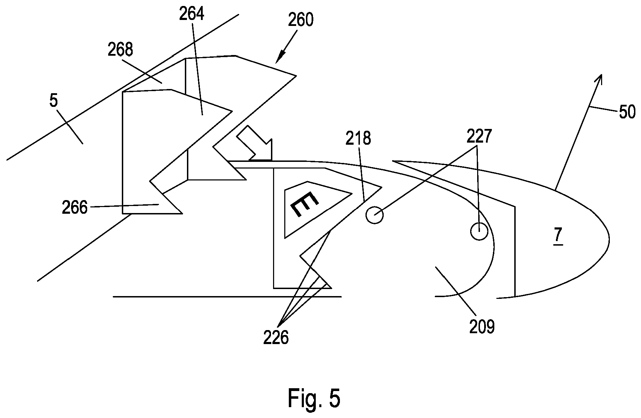

Figure 5 schematically illustrates a connection assembly 209, which in this case is schematically illustrated by showing rollers of a roller bearing 227 thereof, as well as a high lift body 7 which may be supported by a roller bearing as described previously. In addition, an arrow 50 illustrating the direction of a possible force incident on the high lift body is shown in Figure 5.

Here, a connection structure 218 of the connection assembly is schematically illustrated by an outline thereof. The connection structure 218 is connected to a bracket 260 via a plurality of connections. The bracket 260 comprises a first and second flange 264, 266, as well as a third and fourth flange, where the third and fourth flanges are laterally offset (e.g. in the wing span direction) relative to the first and second flanges 264, 266 and connected by an intermediate member 268 located therebetween, and in this example oriented perpendicular to each flange. In the following description, the connection between the first and second flanges 264, 266 and the high lift assembly will principally be described for simplicity. However, it should be noted that the third and fourth flanges also comprise connection points for connection to connection points on the connection structure 218 of the connection assembly, analogous to the first and second flanges 264, 266. The first and second flanges 264, 266 may therefore allow connection to a first side of the connection assembly, while the third and fourth flanges may permit connection to a second, opposite side of the connection assembly.

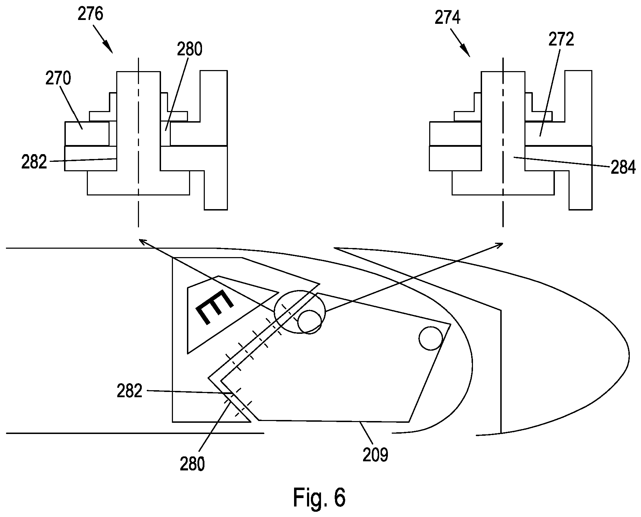

Each of the bracket 260 and the connection structure 218 comprises a plurality of connection points 280, 282 located thereon. In particular, the plurality of connection points are located on, and may be defined by, the first and second flanges 264, 266. Each of the first and second flanges comprise a landing surface 270, 272, which may be located perpendicular to the first and second flanges 264, 266 (e.g. extending in the span-wise direction of the wing), and/or which may be located parallel to a surface of the connection structure 218 to be connected to the first and second flanges 264, 266. The landing surfaces 270, 272 may provide a surface which abuts the connection structure 218 of the connection assembly 209 in order to facilitate placement of the connection assembly 209 relative to the bracket 260. As illustrated in Figure 5 and Figure 6, the landing surfaces 270, 272 are perpendicular to one another when viewed in a span-wise direction, such that the connection structure 218 may be guided towards an approximate installation position by the first and second flanges 264, 266. In such examples, the connection structure may comprise a profile that is configured to engage with the landing surfaces 270, 272. For example, the connection structure 218 may comprise a first surface and a second surface that are configured to abut the landing surfaces 270, 272 of the first and second flanges. The first and second surfaces may therefore have the same orientation as the landing surfaces 270, 272, e.g. they may be oriented at right-angles, or approximately right-angles. The first and second surfaces of the connection structure 218 may be located at one side thereof, and in the case where the connection structure 218 is in the form of a cassette (see Figure 3, for example), the first and second surface of the connection structure 218 may be obliquely oriented relative to the main body of the cassette, which may be located in line with the orientation of the wing (e.g. having upper and lower surfaces parallel to the upper and lower surfaces of the wing).

Figure 6 illustrates the connection between the first and second flanges 264, 266 and the connection structure 218 of the connection assembly in more detail. Here, a "slave connection point" 276 and a "master connection point" 274 are illustrated in the cross sections of the connection illustrated in the upper half of Figure 6. It can be seen that the connection points in the connection structure are in the form of a circular aperture that is defined in the outer connection structure 218 thereof, while in the case of the first and second flanges 264, 266, the connection points are in the form of a circular aperture defined in the landing surface thereof. At least one of the connection points on the bracket 260 may be a master connection point, while the remainder may be slave connection points. In practice, multiple master connection points may be present on the bracket 260, for example two or three may be located on (e.g. divided between) the first and second flanges. Alternatively, all of the master connection points may be located on one flange, e.g. either the first or second flange 264, 266, meaning that a majority of the force transmitted from the high lift assembly to the main wing may be transmitted through this flange. In some cases, all the master connection points may be located on one flange of any of the first to fourth flanges.

In the case of a master connection point, the connection point of the bracket 260 may have a predetermined width. This width may be considered to be a "first width" and may be equal (e.g. substantially equal) to the width of the connection point on the connection structure 218. In the case of a slave connection point, the connection point of the bracket may have a predetermined width that is a second width and that is larger than the first width. In this case, since the connection points are in the form of a circular aperture, the first width may be a first diameter, and the second width may be a second diameter.

In use, the connection structure 218 may be guided by the landing surfaces 270, 272 into an approximate position for connection with the bracket 260. The connection points of the connection structure 282 may then be aligned with the connection points of the bracket 280 for connection with a connector therebetween. The connector may be an elongate connector such as a bolt, screw, or the like, and may be fastened at one end by a nut. The master connection points 274 may first be connected to a corresponding connection structure connection point 282, and then the slave connection points 276 may be connected to a corresponding connection point 282 of the connection structure 218. Since the slave connection points 276 have a larger diameter, they may be more resistant to slight deviations in the location of the connection points on the bracket and/or the connection structure 218 due to tolerances during construction of the components. Therefore, the connection assembly 209 and the high lift assembly may still be able to be connected to the main wing, even where the alignment of the connection points 280, 282 is not exactly as expected. This may be a particular advantage in the case where the main wing, or the wing box of the main wing, has been preassembled before the high lift assembly is connected thereto, since once the main wing (e.g. the wing box) has been preassembled, small inaccuracies due to tolerances may be more difficult to correct. Therefore, the present design of bracket 260 and connection assembly permits more flexible attachment therebetween, and facilitates modular construction of the wing of an aircraft.

## Claims

1. A wing (3) for an aircraft (1), comprising:
a main wing (5);
a high lift assembly comprising:
a high lift body comprising a high lift structure;
a bracket (260); and
a connection assembly (209) comprising a slat track (117) and a roller bearing (227) that mounts the slat track (117) to the main wing (5) and that movably connects the high lift body (7) to the main wing (5), such that the high lift body (7) is movable between a retracted position and at least one extended position, and the connection assembly (209) comprising a plurality of connection points (280, 282) for connection to the main wing (5);
the bracket (260) connecting the connection assembly (209) to the main wing (5) and comprising a plurality of bracket connection points (280) for connecting the connection assembly (209) to the main wing (5), the connection assembly (209) of the high lift assembly comprising a plurality of high lift connection points (282), each high lift connection point (282) corresponding to a connection point (280) of the bracket (260);
wherein each high lift connection point (282) and bracket connection point (280) are connected by a connector;
wherein the bracket (260) comprises a first and a second flange (264, 266); **characterized in that** the plurality of bracket connection points are located on the first and second flange (264, 266) and each of the first and second flange (264, 266) comprise a respective first and second landing surface configured to abut a surface of the connection assembly (209), the first landing surface (270) being oriented perpendicular to the second landing surface (272).

2. The wing (3) for an aircraft according to claim 1, wherein the plurality of high lift connection points (282) are located in both of the first and second landing surfaces (270, 272).

3. The wing (3) for an aircraft according to claim 1 or 2, wherein the landing surfaces (270, 272) are relatively oriented such that one landing surface is located lower than the other landing surface when the wing is attached to a grounded aircraft.

4. The wing (3) for an aircraft according to any preceding claim, wherein the first and second landing surfaces (270, 272) are located obliquely relative to the thickness direction (67) of the wing (3).

5. The wing (3) for an aircraft according to any preceding claim, wherein the bracket connection points (280) and the high lift connection points (282) are apertures defined in the first and second flanges, and the connection assembly (209) respectively, and the first and second widths of the connection points (280, 282) are first and second diameters.

6. The wing (3) for an aircraft according to any preceding claim, wherein at least one of the plurality of bracket connection points (280) is a master connection point (274) having first width, and the remainder of the bracket connection points (280) are slave connection points (276) having a second width, and wherein the high lift connection points (282) each have a width equal to the first width.

7. The wing (3) for an aircraft according to claim 6, wherein the first width is smaller than the second width.

8. The wing (3) for an aircraft according to claim 6 or 7, wherein the bracket (260) comprises at least two master connection points (274), and all of the at least two master connection points (274) are located on either the first or the second flange.

9. The wing (3) according to any preceding claim, comprising a third and a fourth flange each comprising a respective third and fourth landing surface, wherein the third landing surface is located in the same plane as the first landing surface, and the fourth landing surface is located in the same plane as the second landing surface.

10. The wing (3) according to claim 9, wherein the third flange is identical to the first flange, and the fourth flange is identical to the second flange, and the third and fourth flange are laterally spaced from the first and second flange respectively, such that the connection assembly (209) may be at least partially located therebetween.

11. The wing (3) according to any preceding claim, wherein the connection assembly (209) comprises a first surface and a second surface, the plurality of high lift connection points (282) being located in the first and second surface, and wherein the high lift connection points (282) located in the first surface are configured to connect with the bracket connection points (280) of the first flange, and wherein the high lift connection points (282) located in the second surface are configured to connect with the bracket connection points (280) of the second flange.

12. A high lift assembly for a wing (3) for an aircraft (1), comprising:
a high lift body comprising a high lift structure;
a bracket (260); and
a connection assembly (209) comprising a roller bearing (227) and a slat track (117) that is configured to be mounted to a main wing (5) of the wing (3) via the roller bearing (227) such that the slat track (117) movably connects the high lift body to the main wing (5) such that the high lift body is movable between a retracted position and at least one extended position, the connection assembly (209) additionally comprising a plurality of high lift connection points (282), each high lift connection point (282) corresponding to a connection point (280) on the bracket, each high lift connection point and corresponding bracket connection point being connected by a connector, wherein the bracket (260) comprises a first and a second flange and is configured to connect the connection assembly (209) to the main wing (5), **characterized in that** the plurality of bracket connection points (280) are located on the first and second flange and each of the first and second flange comprise a respective first and second landing surface (270, 272) configured to abut a surface of the connection assembly (209), the first landing surface (270) being oriented perpendicular to the second landing surface (272).

13. A method for connecting a high lift assembly to the wing (3) of an aircraft (1) according to any of claims 1 to 11, comprising:
preassembling the wing (5) for an aircraft (1);
aligning the at least one bracket connection point (280) with the corresponding high lift connection point (282) on the first landing surface (270);
connecting the at least one aligned bracket connection point (280) with the corresponding high lift connection points (282) via the connector;
subsequently connecting the remaining bracket connection points (280) with the corresponding high lift connection points (282) via the connector.

14. The method according to claim 13, comprising contacting a surface of the connection assembly (209) with both the first and second landing surface (270, 272) of the bracket (260) before aligning the bracket connection point (280) with a corresponding high lift connection point (282).

15. An aircraft (1) comprising a wing (3) according to any of claims 1 to 11.

## Patentansprüche

1. Tragfläche (3) für ein Flugzeug (1), umfassend:
einen Hauptflügel (5);
eine Hochauftriebsanordnung, umfassend:
einen Hochauftriebskörper, der eine Hochauftriebsstruktur umfasst;
eine Halterung (260); und
eine Verbindungsanordnung (209), die eine Vorflügelschiene (117) und ein Rollenlager (227) umfasst, das die Vorflügelschiene (117) an dem Hauptflügel (5) montiert und das den Hochauftriebskörper (7) beweglich mit dem Hauptflügel (5) verbindet, sodass der Hochauftriebskörper (7) zwischen einer eingefahrenen Position und mindestens einer ausgefahrenen Position beweglich ist, und wobei die Verbindungsanordnung (209) eine Vielzahl von Verbindungspunkten (280, 282) zur Verbindung mit dem Hauptflügel (5) umfasst;
wobei die Halterung (260) die Verbindungsanordnung (209) mit dem Hauptflügel (5) verbindet und eine Vielzahl von Halterungsverbindungspunkten (280) zum Verbinden der Verbindungsanordnung (209) mit dem Hauptflügel (5) umfasst, wobei die Verbindungsanordnung (209) der Hochauftriebsanordnung eine Vielzahl von Hochauftriebsverbindungspunkten (282) umfasst, wobei jeder Hochauftriebsverbindungspunkt (282) einem Verbindungspunkt (280) der Halterung (260) entspricht;
wobei jeder Hochauftriebsverbindungspunkt (282) und Halterungsverbindungspunkt (280) durch ein Verbindungselement verbunden sind; wobei die Halterung (260) einen ersten und einen zweiten Flansch (264, 266) umfasst; **dadurch gekennzeichnet, dass** die Vielzahl von Halterungsverbindungspunkten an dem ersten und zweiten Flansch (264, 266) angeordnet sind und jeder des ersten und zweiten Flansches (264, 266) eine jeweilige erste und zweite Anlagefläche umfasst, die so konfiguriert sind, dass sie an einer Oberfläche der Verbindungsanordnung (209) anliegen, wobei die erste Anlagefläche (270) senkrecht zu der zweiten Anlagefläche (272) ausgerichtet ist.

2. Tragfläche (3) für ein Flugzeug nach Anspruch 1, wobei die Vielzahl von Hochauftriebsverbindungspunkten (282) sowohl in der ersten als auch in der zweiten Anlagefläche (270, 272) angeordnet sind.

3. Tragfläche (3) für ein Flugzeug nach Anspruch 1 oder 2, wobei die Anlageflächen (270, 272) relativ so ausgerichtet sind, dass eine Anlagefläche tiefer als die andere Anlagefläche angeordnet ist, wenn die Tragfläche an einem am Boden befindlichen Flugzeug befestigt ist.

4. Tragfläche (3) für ein Flugzeug nach einem der vorhergehenden Ansprüche, wobei die erste und zweite Anlagefläche (270, 272) schräg relativ zur Dickenrichtung (67) der Tragfläche (3) angeordnet sind.

5. Tragfläche (3) für ein Flugzeug nach einem der vorhergehenden Ansprüche, wobei die Halterungsverbindungspunkte (280) und die Hochauftriebsverbindungspunkte (282) Öffnungen sind, die in dem ersten und zweiten Flansch bzw. der Verbindungsanordnung (209) definiert sind, und die erste und zweite Breite der Verbindungspunkte (280, 282) ein erster und ein zweiter Durchmesser sind.

6. Tragfläche (3) für ein Flugzeug nach einem der vorhergehenden Ansprüche, wobei mindestens einer der Vielzahl von Halterungsverbindungspunkten (280) ein Hauptverbindungspunkt (274) mit einer ersten Breite ist, und der Rest der Halterungsverbindungspunkte (280) Nebenverbindungspunkte (276) mit einer zweiten Breite sind, und wobei die Hochauftriebsverbindungspunkte (282) jeweils eine Breite gleich der ersten Breite aufweisen.

7. Tragfläche (3) für ein Flugzeug nach Anspruch 6, wobei die erste Breite kleiner als die zweite Breite ist.

8. Tragfläche (3) für ein Flugzeug nach Anspruch 6 oder 7, wobei die Halterung (260) mindestens zwei Hauptverbindungspunkte (274) umfasst und alle der mindestens zwei Hauptverbindungspunkte (274) entweder an dem ersten oder an dem zweiten Flansch angeordnet sind.

9. Tragfläche (3) nach einem der vorhergehenden Ansprüche, umfassend einen dritten und einen vierten Flansch, die jeweils eine jeweilige dritte und vierte Anlagefläche umfassen, wobei die dritte Anlagefläche in derselben Ebene wie die erste Anlagefläche angeordnet ist und die vierte Anlagefläche in derselben Ebene wie die zweite Anlagefläche angeordnet ist.

10. Tragfläche (3) nach Anspruch 9, wobei der dritte Flansch identisch mit dem ersten Flansch ist und der vierte Flansch identisch mit dem zweiten Flansch ist, und der dritte und vierte Flansch jeweils seitlich von dem ersten und zweiten Flansch beabstandet sind, sodass die Verbindungsanordnung (209) zumindest teilweise dazwischen angeordnet sein kann.

11. Tragfläche (3) nach einem der vorhergehenden Ansprüche, wobei die Verbindungsanordnung (209) eine erste Oberfläche und eine zweite Oberfläche umfasst, wobei die Vielzahl von Hochauftriebsverbindungspunkten (282) in der ersten und zweiten Oberfläche angeordnet sind, und wobei die Hochauftriebsverbindungspunkte (282), die in der ersten Oberfläche angeordnet sind, so konfiguriert sind, dass sie mit den Halterungsverbindungspunkten (280) des ersten Flansches verbunden werden, und wobei die Hochauftriebsverbindungspunkte (282), die in der zweiten Oberfläche angeordnet sind, so konfiguriert sind, dass sie mit den Halterungsverbindungspunkten (280) des zweiten Flansches verbunden werden.

12. Hochauftriebsanordnung für eine Tragfläche (3) für ein Flugzeug (1), umfassend:
einen Hochauftriebskörper, der eine Hochauftriebsstruktur umfasst;
eine Halterung (260); und
eine Verbindungsanordnung (209), die ein Rollenlager (227) und eine Vorflügelschiene (117) umfasst, die so konfiguriert ist, dass sie über das Rollenlager (227) an einem Hauptflügel (5) der Tragfläche (3) montiert werden kann, sodass die Vorflügelschiene (117) den Hochauftriebskörper beweglich mit dem Hauptflügel (5) verbindet, sodass der Hochauftriebskörper zwischen einer eingefahrenen Position und mindestens einer ausgefahrenen Position beweglich ist, wobei die Verbindungsanordnung (209) zusätzlich eine Vielzahl von Hochauftriebsverbindungspunkten (282) umfasst, wobei jeder Hochauftriebsverbindungspunkt (282) einem Verbindungspunkt (280) an der Halterung entspricht, wobei jeder Hochauftriebsverbindungspunkt und entsprechende Halterungsverbindungspunkt durch ein Verbindungselement verbunden sind,
wobei die Halterung (260) einen ersten und einen zweiten Flansch umfasst und so konfiguriert ist, dass sie die Verbindungsanordnung (209) mit dem Hauptflügel (5) verbindet;
**dadurch gekennzeichnet, dass** die Vielzahl von Halterungsverbindungspunkten (280) an dem ersten und zweiten Flansch angeordnet sind und jeder des ersten und zweiten Flansches eine jeweilige erste und zweite Anlagefläche (270, 272) umfasst, die so konfiguriert sind, dass sie an einer Oberfläche der Verbindungsanordnung (209) anliegen, wobei die erste Anlagefläche (270) senkrecht zu der zweiten Anlagefläche (272) ausgerichtet ist.

13. Verfahren zum Verbinden einer Hochauftriebsanordnung mit der Tragfläche (3) eines Flugzeugs (1) nach einem der Ansprüche 1 bis 11, umfassend:
Vormontieren des Flügels (5) für ein Flugzeug (1);
Ausrichten des mindestens einen Halterungsverbindungspunkts (280) mit dem entsprechenden Hochauftriebsverbindungspunkt (282) auf der ersten Anlagefläche (270);
Verbinden des mindestens einen ausgerichteten Halterungsverbindungspunkts (280) mit den entsprechenden Hochauftriebsverbindungspunkten (282) über das Verbindungselement; anschließendes Verbinden der verbleibenden Halterungsverbindungspunkte (280) mit den entsprechenden Hochauftriebsverbindungspunkten (282) über das Verbindungselement.

14. Verfahren nach Anspruch 13, umfassend das In-Kontakt-Bringen einer Oberfläche der Verbindungsanordnung (209) sowohl mit der ersten als auch mit der zweiten Anlagefläche (270, 272) der Halterung (260) vor dem Ausrichten des Halterungsverbindungspunkts (280) mit einem entsprechenden Hochauftriebsverbindungspunkt (282).

15. Flugzeug (1), umfassend eine Tragfläche (3) nach einem der Ansprüche 1 bis 11.

## Revendications

1. Une aile (3) pour un aéronef (1), comprenant :
une voilure principale (5) ;
un ensemble hypersustentateur comprenant :
un corps hypersustentateur comprenant une structure hypersustentatrice ;
un support (260) ; et
un ensemble de connexion (209) comprenant un rail de bec (117) et un roulement à rouleaux (227) qui monte le rail de bec (117) sur la voilure principale (5) et qui connecte de manière mobile le corps hypersustentateur (7) à la voilure principale (5), de telle sorte que le corps hypersustentateur (7) est mobile entre une position rétractée et au moins une position déployée, et l'ensemble de connexion (209) comprenant une pluralité de points de connexion (280, 282) pour la connexion à la voilure principale (5) ;
le support (260) connectant l'ensemble de connexion (209) à la voilure principale (5) et comprenant une pluralité de points de connexion de support (280) pour connecter l'ensemble de connexion (209) à la voilure principale (5), l'ensemble de connexion (209) de l'ensemble hypersustentateur comprenant une pluralité de points de connexion d'hypersustentateur (282), chaque point de connexion d'hypersustentateur (282) correspondant à un point de connexion (280) du support (260) ;
dans laquelle chaque point de connexion d'hypersustentateur (282) et point de connexion de support (280) sont connectés par un connecteur ;
dans laquelle le support (260) comprend une première et une deuxième bride (264, 266) ; **caractérisée en ce que** la pluralité de points de connexion de support sont situés sur la première et la deuxième bride (264, 266) et chacune des première et deuxième brides (264, 266) comprend une première et une deuxième surface d'appui respectives configurées pour venir en butée contre une surface de l'ensemble de connexion (209), la première surface d'appui (270) étant orientée perpendiculairement à la deuxième surface d'appui (272).

2. L'aile (3) pour un aéronef selon la revendication 1, dans laquelle la pluralité de points de connexion d'hypersustentateur (282) sont situés à la fois dans les première et deuxième surfaces d'appui (270, 272).

3. L'aile (3) pour un aéronef selon la revendication 1 ou 2, dans laquelle les surfaces d'appui (270, 272) sont orientées de manière relative de telle sorte qu'une surface d'appui est située plus bas que l'autre surface d'appui lorsque l'aile est fixée à un aéronef au sol.

4. L'aile (3) pour un aéronef selon l'une quelconque des revendications précédentes, dans laquelle les première et deuxième surfaces d'appui (270, 272) sont situées obliquement par rapport à la direction de l'épaisseur (67) de l'aile (3).

5. L'aile (3) pour un aéronef selon l'une quelconque des revendications précédentes, dans laquelle les points de connexion de support (280) et les points de connexion d'hypersustentateur (282) sont des ouvertures définies dans les première et deuxième brides, et l'ensemble de connexion (209) respectivement, et les première et deuxième largeurs des points de connexion (280, 282) sont des premier et deuxième diamètres.

6. L'aile (3) pour un aéronef selon l'une quelconque des revendications précédentes, dans laquelle au moins un de la pluralité de points de connexion de support (280) est un point de connexion maître (274) ayant une première largeur, et le reste des points de connexion de support (280) sont des points de connexion esclaves (276) ayant une deuxième largeur, et dans laquelle les points de connexion d'hypersustentateur (282) ont chacun une largeur égale à la première largeur.

7. L'aile (3) pour un aéronef selon la revendication 6, dans laquelle la première largeur est inférieure à la deuxième largeur.

8. L'aile (3) pour un aéronef selon la revendication 6 ou 7, dans laquelle le support (260) comprend au moins deux points de connexion maîtres (274), et la totalité des au moins deux points de connexion maîtres (274) sont situés soit sur la première soit sur la deuxième bride.

9. L'aile (3) selon l'une quelconque des revendications précédentes, comprenant une troisième et une quatrième bride comprenant chacune une troisième et une quatrième surface d'appui respectives, dans laquelle la troisième surface d'appui est située dans le même plan que la première surface d'appui, et la quatrième surface d'appui est située dans le même plan que la deuxième surface d'appui.

10. L'aile (3) selon la revendication 9, dans laquelle la troisième bride est identique à la première bride, et la quatrième bride est identique à la deuxième bride, et les troisième et quatrième brides sont espacées latéralement des première et deuxième brides respectivement, de telle sorte que l'ensemble de connexion (209) peut être au moins partiellement situé entre elles.

11. L'aile (3) selon l'une quelconque des revendications précédentes, dans laquelle l'ensemble de connexion (209) comprend une première surface et une deuxième surface, la pluralité de points de connexion d'hypersustentateur (282) étant situés dans la première et la deuxième surface, et dans laquelle les points de connexion d'hypersustentateur (282) situés dans la première surface sont configurés pour se connecter aux points de connexion de support (280) de la première bride, et dans laquelle les points de connexion d'hypersustentateur (282) situés dans la deuxième surface sont configurés pour se connecter aux points de connexion de support (280) de la deuxième bride.

12. Un ensemble hypersustentateur pour une aile (3) pour un aéronef (1), comprenant :
un corps hypersustentateur comprenant une structure hypersustentatrice ;
un support (260) ; et
un ensemble de connexion (209) comprenant un roulement à rouleaux (227) et un rail de bec (117) qui est configuré pour être monté sur une voilure principale (5) de l'aile (3) via le roulement à rouleaux (227) de telle sorte que le rail de bec (117) connecte de manière mobile le corps hypersustentateur à la voilure principale (5) de telle sorte que le corps hypersustentateur est mobile entre une position rétractée et au moins une position déployée, l'ensemble de connexion (209) comprenant en outre une pluralité de points de connexion d'hypersustentateur (282), chaque point de connexion d'hypersustentateur (282) correspondant à un point de connexion (280) sur le support, chaque point de connexion d'hypersustentateur et point de connexion de support correspondant étant connectés par un connecteur,
dans lequel le support (260) comprend une première et une deuxième bride et est configuré pour connecter l'ensemble de connexion (209) à la voilure principale (5) ;
**caractérisé en ce que** la pluralité de points de connexion de support (280) sont situés sur la première et la deuxième bride et chacune des première et deuxième brides comprend une première et une deuxième surface d'appui (270, 272) respectives configurées pour venir en butée contre une surface de l'ensemble de connexion (209), la première surface d'appui (270) étant orientée perpendiculairement à la deuxième surface d'appui (272).

13. Un procédé pour connecter un ensemble hypersustentateur à l'aile (3) d'un aéronef (1) selon l'une quelconque des revendications 1 à 11, comprenant:
le pré-assemblage de l'aile (5) pour un aéronef (1) ;
l'alignement de l'au moins un point de connexion de support (280) avec le point de connexion d'hypersustentateur (282) correspondant sur la première surface d'appui (270) ;
la connexion de l'au moins un point de connexion de support (280) aligné avec les points de connexion d'hypersustentateur (282) correspondants via le connecteur ;
la connexion subséquente des points de connexion de support (280) restants avec les points de connexion d'hypersustentateur (282) correspondants via le connecteur.

14. Le procédé selon la revendication 13, comprenant la mise en contact d'une surface de l'ensemble de connexion (209) avec à la fois la première et la deuxième surface d'appui (270, 272) du support (260) avant l'alignement du point de connexion de support (280) avec un point de connexion d'hypersustentateur (282) correspondant.

15. Un aéronef (1) comprenant une aile (3) selon l'une quelconque des revendications 1 à 11.
